# EUROPEAN PATENT SPECIFICATION

(11) **EP 2 854 256 B1**
(45) Date of publication and mention of the grant of the patent: **28.06.2017**
(21) Application number: 13186189.0
(22) Date of filing: 26.09.2013
(51) Int. Cl.: H02K 1/14, H02K 7/18

(54) **Pole unit and stator assembly for a wind turbine generator, and methods of manufacturing the same**
Poleinheit und Statoranordnung für einen Windturbinengenerator und Herstellungsverfahren dafür
Unité polaire, ensemble stator de générateur à turbine éolienne et procédés de fabrication de celui-ci

(43) Date of publication of application: 01.04.2015
(73) Proprietor: Siemens Aktiengesellschaft, 80333 München (DE)
(72) Inventor: Noer, Bjarne, 8800 Viborg (DK)

(56) References cited:
- EP-A1- 2 385 609
- DE-A1-102011 017 456
- GB-A- 2 472 125
- US-A1- 2004 263 015

## Description

### Field of Invention

The present invention relates to the field of wind turbine generators, in particular to a pole unit for a stator assembly of a wind turbine generator and a method of manufacturing such a pole unit. The present invention further relates to a stator assembly for a wind turbine generator, a corresponding method of assembling such stator assembly, a wind turbine generator and a wind turbine.

### Art Background

A wind turbine generator generally comprises a stator and a rotor, e.g. a stator comprising a plurality of coils and a rotor comprising a plurality of magnets. When the rotor rotates relative to the stator, electric current is induced in the coils.

Due to the significant size and weight of modern wind turbines, the stator can usually not be transported from the production plant in one piece. Instead, it is known to produce stator segments which can be fitted together to form the stator. More specifically, the stator segments are formed by welding stamped lamination with slots onto a rounded support structure corresponding to a part of a cylinder and fitting pre-manufactured coils (i.e. coils wound around a tubular material) into the stator slots. An exemplary stator may e.g. be built from three 120° segments, four 90°, six 60° or even twelve 30° segments each comprising a number of coils, such that the complete stator comprises a total of 82, 96, 108 or 142 coils. Although such segments can be transported, e.g. on special trucks, the transportation is still cumbersome and expensive, in particular due to the size and curved shape of the segments, which makes an efficient packing of the segments nearly impossible.

Apart from the transportation issue, the large stator segments suffer from a number of further drawbacks. First of all, it is very difficult to assemble the segments to a total stator, with the precision required to meet the tight tolerances relative to the rotor, i.e. to assure a small and uniform air gap between rotor and stator. Furthermore, due to the use of pre-manufactured coils, adjustment of the capacitance between coil and rotor necessitates addition of conductive material between coil and rotor after fitting of the coils.

GB 2 472 125 A discloses a pole unit for a stator assembly. The pole unit comprises a laminated body structure comprising a base portion, an intermediate portion, and a top portion. A coil is wound around the intermediate portion. The intermediate portion extends from the upper surface of the base portion. The top portion extends from the end of the intermediate portion that is opposite to the base portion and has an increasing cross-section in the direction away from the intermediate portion.

DE 10 2011 017 456 A1 relates to a stator segment for a segmented executed stator of an electric motor. The stator segment comprises a laminated core, said laminated core having a plastic layer which is arranged between the winding portion of the stator winding and the laminated core for electrical insulation the winding portion of the laminated core.

US 2004/263015 A1 relates to a stator for use in rotational electric machines, such as electric motors and generators, an insulating bobbin for the stator and a manufacturing method of the stator. It shows that the stator is constructed by connecting a plurality of stator modules in an annular shape. Each stator module includes a stator core made up of a yoke portion and a tooth portion, an insulating bobbin mounted on the tooth portion of the stator core and a rectangular wire wound around the insulating bobbin.

EP 2 385 609 A1 relates to a generator with a segmented stator.

Accordingly, there may be a need for an improved and simplified way of segmenting a stator for a wind turbine generator in order to overcome or at least reduce the disturbing impact of the above-mentioned and other drawbacks.

### Summary of the Invention

This need may be met by the subject matter according to the independent claims. Advantageous embodiments of the present invention are described by the dependent claims.

According to a first aspect of the invention there is provided a pole unit for a stator assembly of a wind turbine generator, the pole unit comprising (a) a laminated body structure comprising a base portion, an intermediate portion, and a top portion, and (b) a coil wound around the intermediate portion, wherein (c) the intermediate portion extends from at least a part of an upper surface of the base portion, and wherein (d) the top portion extends from the end of the intermediate portion that is opposite to the base portion and has an increasing cross-section in the direction away from the intermediate portion.

This aspect of the invention is based on the idea that a compact single pole unit for a stator assembly is constructed as a high-precision laminated integral body structure comprising a base portion, an intermediate portion and a top portion, whereby the coil is wound directly around the intermediate portion. The increasing cross-section of the top section reduces the area of the coil surface that can be "seen" by a rotor and thereby reduces the capacitance between coil and rotor. The increasing cross-section further assists in keeping the coil in position and reduces noise. The pole unit can be manufactured with high precision by stamping thin metal sheets and gluing them together to form the laminated body structure. Furthermore, the directly wound coil can be fit tightly to the body structure. The compact pole unit can be efficiently packed for storage and transportation.

In the present context, the term "laminated body structure" may in particular denote an integral structure formed by gluing metal sheets of varying shape and size together.

The base portion of the laminated body structure forms a lower part of the pole unit. In other words, the base portion is the part of the laminated body structure which is supposed to be arranged and fastened on a stator support structure during assembly of a stator.

The intermediate portion of the laminated body structure is the part of the laminated body structure that forms a metallic core for the coil of the pole unit.

The top portion of the laminated body structure forms the head of the pole unit and is the part of the pole unit that will be closest to a rotor when fitted in a generator. According to an embodiment of the invention, the base portion has a substantially flat rectangular shape, the intermediate portion has a substantially rectangular cross-sectional shape, and the cross-sectional area of the intermediate portion is smaller than the area of the base portion.

In the present context, the term "rectangular" may in particular denote any shape with four pairwise parallel sides where all corners are about 90°. In other words, a quadratic shape is also considered to be a rectangular shape.

In this embodiment, the base portion is substantially flat in the sense that the thickness of the base portion is small relative to the other two dimensions (width and depth) of the base portion. However, the thickness of the base portion is sufficient to provide the necessary support and stability for the pole unit when the latter is mounted on a stator support structure.

In this embodiment, the intermediate portion has a substantially rectangular cross-sectional shape and a cross-sectional area that is smaller than the area of the base portion. In other words, the intermediate portion extends as a beam from the base portion, such that a T-shaped structure is formed.

According to a further embodiment of the invention, the base portion comprises a recess, the recess being formed in a lower surface of the base portion.

The recess is formed in the lower surface of the base portion, i.e. on the surface of the base portion that is opposite to the intermediate portion.

The recess may preferably have an elongate shape and extend centrally from one side of the base portion to the opposing side of the base portion, i.e. across the entire lower surface of the base portion in one direction thereof.

The bottom of the recess may preferably be parallel to the upper and lower surface of the base portion. The sides of the recess may preferably be tilted such that the cross-section of the recess increases in the direction from the lower surface of the base portion towards the bottom of the recess.

The recess may preferably be formed during the lamination process or it may be cut out from the laminated structure.

According to a further embodiment of the invention, the base portion comprises at least one protrusion, the at least one protrusion being formed on the lower surface of the base portion.

The at least one protrusion is preferably an integral part of the base portion, i.e. it is formed directly during the lamination process.

The at least one protrusion may preferably have a rectangular cross-sectional shape and extend in the vicinity of and parallel with one side of the base portion. The at least one protrusion may preferably extend across the entire lower surface of the base portion.

In embodiments comprising the above-mentioned recess, the at least one protrusion may preferably extend in parallel with the recess.

In the present embodiment, a further protrusion of similar shape and size may extend in the vicinity of and in parallel with the side of the base portion that is opposite to the above-mentioned one side of the base portion. In other words, the base portion may comprise two similar and parallel protrusions extending in the vicinity of opposite sides of the base portion.

According to a further embodiment of the invention, the recess is adapted to engage with a fastening member, and/or the at least one protrusion is adapted to engage with a corresponding recess in a support structure.

The recess may in particular be adapted to engage with a fastening member having a shape fitting that of the recess such that the pole unit can be pushed or slid onto the fastening member.

The at least one protrusion may in particular be adapted to engage with a recess in a support structure, such that the pole unit can be guided towards a predetermined position relative to the support structure.

In embodiments comprising both the recess and the at least one protrusion, the pole unit may be fastened to the support structure by means of at least one screw extending through the support structure and into the fastening member such that the fastening member - and thereby the pole unit - is pulled towards the support structure.

According to a further embodiment of the invention, the base portion comprises a side protrusion and a side recess, the side protrusion and the side recess being formed in opposing side surfaces of the base portion.

The side protrusion and the side recess preferably have corresponding shapes, such that the side protrusion of one pole unit can engage with the side recess of a neighboring pole unit during assembly of a stator assembly. Thereby, correct positioning of the pole units and stability of the stator assembly can be facilitated.

According to a further embodiment of the invention, the coil comprises a flat electrically conductive wire material.

In the present context, term "flat electrically conductive wire material" may in particular denote a band-shaped wire, i.e. a flat wire having a rectangular cross-sectional shape.

The flat electrically conductive wire material may preferably comprise copper or a similar metallic material with excellent electrical conductivity properties.

By forming the coil from a flat wire material, a tight fit around the intermediate portion can be achieved.

According to a second aspect of the invention, there is provided a stator assembly for a wind turbine generator, the stator assembly comprising (a) a stator support structure, and (b) a plurality of pole units according to the first aspect or any of the above embodiments, wherein the pole units are arranged along a circumference of the stator support structure.

This aspect of the invention is based on the idea that a stator assembly is constructed by arranging a plurality of compact high-precision single pole units along the circumference of the stator support structure. Thereby, the pole units and the stator support structure can be transported efficiently and separate from one another to a suitable place, such as the place where a wind turbine is to be installed, and assembled.

The stator support structure may preferably be a cylindrical structure, which is maximizing the roundness of the stator structure.

According to a third aspect of the invention, there is provided a wind turbine generator comprising a stator assembly according to the second aspect.

The wind turbine generator according to this aspect may be efficiently assembled at the place where a wind turbine is to be installed.

According to a fourth aspect of the invention, there is provided a wind turbine comprising a wind turbine generator according to the third aspect.

The wind turbine according to this aspect may be efficiently assembled at the place of installation.

According to a fifth aspect of the invention, there is provided a method of manufacturing a pole unit for a stator assembly of a wind turbine generator, the method comprising (a) stamping and gluing a plurality of layers of sheet metal, thereby forming a laminated body structure comprising a base portion, an intermediate portion, and a top portion, wherein the intermediate portion extends from at least a part of an upper surface of the base portion, and wherein the top portion extends from the end of the intermediate portion that is opposite to the base portion and has an increasing cross-section in the direction away from the intermediate portion, and (b) winding a coil around the intermediate portion.

This aspect of the invention is based on the idea that a compact single pole unit for a stator assembly is manufactured as a high-precision laminated integral body structure comprising a base portion, an intermediate portion and a top portion, whereby the coil is wound directly around the intermediate portion. The increasing cross-section of the top section reduces the area of the coil surface that can be "seen" by a rotor and thereby reduces the capacitance between coil and rotor. The increasing cross-section further assists in keeping the coil in position and reduces noise. The pole unit is manufactured with high precision by stamping thin metal sheets and gluing them together to form the laminated body structure. Furthermore, the directly wound coil can be fit tightly to the body structure. The compact pole unit can be efficiently packed for storage and transportation.

In the present context, the term "stamping" may particularly denote a process of cutting out a piece of sheet metal, said piece having a predetermined shape and size.

In the present context, the term "gluing" may particularly denote a process of providing a layer of adhesive material to a surface of a first stamped piece of sheet metal, arranging a second stamped piece of sheet metal on top of the first stamped piece of sheet metal, and pressing the two stamped pieces of sheet material against each other.

The step of stamping and gluing may preferably be performed in such a manner, that each stamped layer of sheet material is glued onto the existing laminated body structure. In other words, the laminated body structure is formed by adding one layer at a time.

According to a further embodiment of the invention, the method further comprises coating at least a part of the laminated body structure with an electrically insulating material prior to winding the coil around the intermediate portion.

The coating may be provided by spraying the electrically insulating material onto the surface of the laminated body structure or in any other suitable way.

The coating prevents electrical contact between the coil and the laminated body structure.

According to a further embodiment of the invention, the method further comprises (a) mounting the laminated body structure in a winding machine prior to winding the coil around the intermediate portion, and (b) releasing the laminated body structure from the winding machine after winding the coil around the intermediate portion.

The laminated body structure is preferably mounted in the winding machine by means of a fastening member which can also be used to fasten the pole unit to a stator support structure.

According to a sixth aspect of the invention, there is provided a method of assembling a stator assembly for a wind turbine generator, the method comprising (a) providing a stator support structure, (b) providing a plurality of pole units according to the first aspect or any of the above embodiments thereof, and (c) arranging the pole units along a circumference of the stator support structure.

This aspect of the invention is essentially based on the same idea as the second aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a schematic end view of a part of a stator assembly according to an embodiment of the present invention.
Figure 2 shows a top view of a part of a stator assembly according to an embodiment of the present invention.
Figure 3 shows a further schematic end view of a part of a stator assembly according to an embodiment of the present invention.

### Detailed Description

The illustration in the drawing is schematic. It is noted that in different figures, similar or identical elements are provided with the same reference numerals or with reference numerals which differ only within the first digit.

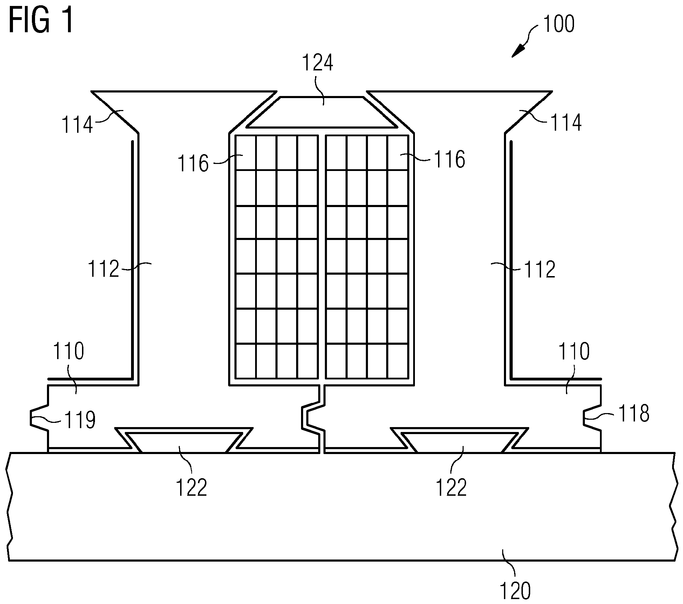

Figure 1 shows a schematic end view of a part of a stator assembly 100 according to an embodiment of the present invention. More specifically, the drawing shows two neighboring pole units arranged on a stator support structure 120. Each pole unit comprises a laminated body structure and a coil 116. The laminated body structure comprises a base portion 110, an intermediate portion 112 and a top portion 114 and is essentially shaped as an upside-down T-structure. In other words, the base portion 110 is relatively broad and flat while the intermediate portion 112 is relatively long and less broad. The top portion 114 is short in comparison to the intermediate portion 112 and has an increasing cross-section towards the top of the structure. In other words, the sides of the top portion are slanted. This shape provides an advantageous reduction in the capacitive coupling between coil 116 and a rotor (not shown) arranged to rotate relative to the stator assembly 100.

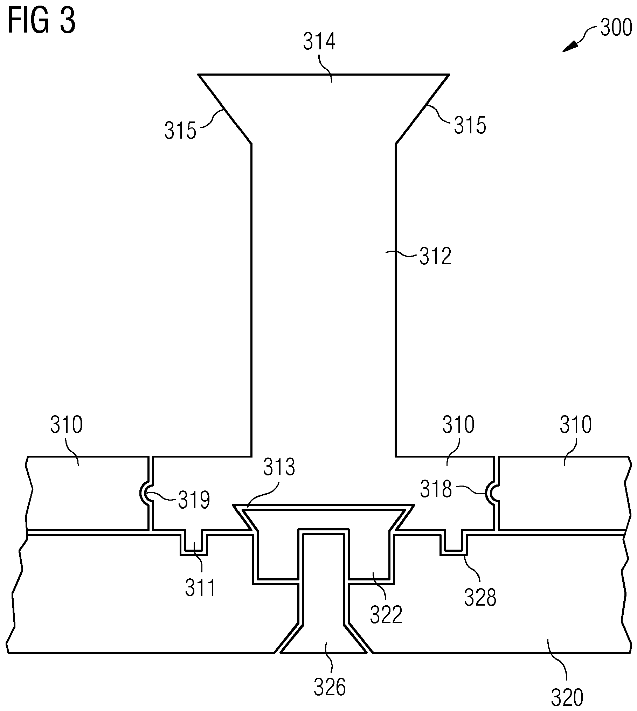

The base portion 110 comprises a side recess 118 and a side protrusion 119 on opposite sides for engaging with corresponding recesses and protrusion of neighboring pole units in order to facilitate positioning and to improve stability of the stator assembly 100. Each pole unit is fastened to the stator support structure 120 via a fastening member 122 which fits into a recess in the lower surface of the base portion 110. The fastening to the stator support structure 120 will be described in greater detail below in connection with Figure 3.

The laminated body structure is made from a plurality of thin metal sheets that are stamped to have suitable shapes and which are glued together to form a solid magnetically conducting body structure. The coil 116 consists of several layers of flat copper wire material which is wound or bent around the intermediate portion 112 of the complete laminated body structure. It should be noted that Figure 1 only shows half of the coil of each of the two pole units. Further, it should be noted that the fastening member 122 is also used to mount the laminated body structure in a winding machine when the coil is wound or bent around the structure. The surface of the laminated body structure, in particular the surface of the intermediate portion 112, is covered with an electrically insulating material in order to isolate the laminated body structure from the coil 116. Similarly, the outer surface of the coil 116 is covered with an electrically insulating material to isolate it from neighboring coils etc. The coils 116 are kept in place by wedge 124 which is made from a composite material and designed to fit snuggly on top of the coils 116 and between opposing sides of the top portions 114 of neighboring pole units.

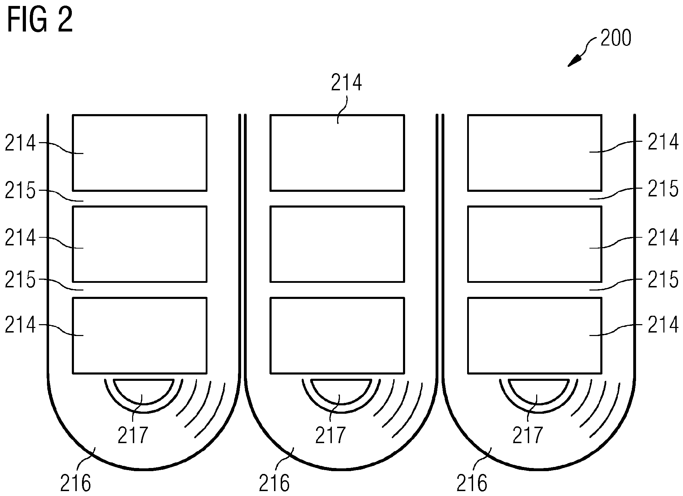

Figure 2 shows a top view of a part of a stator assembly 200 according to an embodiment of the present invention. More specifically, figure 2 shows a top view of three neighboring pole units of the stator assembly 200. As in Figure 1, each pole unit comprises a laminated body structure around which a coil 216 is wound. The laminated body structure comprises air ducts 215 extending through the top portion 214 and at least down through the intermediate portion (not shown) in order to allow a flow of cooling air to cool the coil 216 and laminated body structure during operation. Wedges 217 are arranged at the outside end of the laminated body structure to protect the coil, i.e. to prevent the coil from being bent too strongly.

Figure 3 shows a further schematic end view of a part of a stator assembly 300 according to an embodiment of the present invention. Like in figure 1, several pole units are arranged next to each other and fastened to stator support structure 320. Each pole unit comprises a laminated body structure having a base portion 310, intermediate portion 312 and top portion 314, and a coil (not shown) wound around the intermediate portion 312. The sides 315 of the top portion 314 are slanted such that the width of the top portion 314 increases in the upwards direction. Corresponding side recesses 318 and side protrusions 319 of neighboring pole units engage with each other as described above.

The lower surface of the base portion comprises protrusions 311 and a recess 313. The recess extends along a central part of the lower surface of the base portion, i.e. directly opposite to the intermediate portion 312. The bottom of the recess 313 is substantially flat and parallel with the upper and lower surfaces of the base portion 310. The side walls of the recess are slanted such that the width of the recess increases towards the bottom of the recess. Thereby, the fastening member 322, which has correspondingly slanted upper side walls, can be slid into the recess 313 and pulled down towards the stator support structure 320 by tightening screw 326 which extends through a hole in the stator support structure 320 and into a lower part of the fastening member 322. It should be noted that more than one screw 326 can be used. The protrusions 311 extend on both sides of the recess 313 and serve to facilitate positioning of the pole unit correctly on the stator support structure by fitting the protrusions 311 into corresponding recesses 328 in the upper surface of the stator support member.

It should be noted that a similar mechanism, i.e. the fastening member 322 and screw 326 can be used during production of each single pole unit to fixate the laminated body structure on a surface of a winding machine, said surface having a similar structure as the surface of the shown stator support structure 320. When the laminated body structure is fixed in the winding machine, the coil is wound directly around the intermediate portion 312 of the laminated body structure. Thereby, the pole units can be produced in a simple and efficient manner without the need for fitting a pre-wound coil around a part of the body structure and then subsequently finalizing the top portion of the body structure to provide the desired reduction of noise and the capacitance between coil and rotor. Instead, the complete body structure is produced as a single integral laminated structure, and after coating with insulating material and mounting in the winding machine, the coil is wound directly around the body structure and covered with insulation material already mounted on the pole unit. Finally the wound pole unit is impregnated with electrically insulating resin and hardened at an increased temperature. Apart from the facilitated production, the pole units are relatively compact units that can be packed and transported efficiently in comparison to e.g. huge curved stator segments with e.g. 18 poles.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A pole unit for a stator assembly (100, 200, 300) of a wind turbine generator, the pole unit comprising
a laminated body structure comprising a base portion (110, 310), an intermediate portion (112, 312), and a top portion (114, 214, 314), and
a coil (116, 216) wound around the intermediate portion, wherein the intermediate portion extends from at least a part of an upper surface of the base portion,
wherein the top portion extends from the end of the intermediate portion that is opposite to the base portion and has an increasing cross-section in the direction away from the intermediate portion, and
wherein the laminated body structure comprises an air duct (215) adapted to allow a flow of cooling air.

2. The unit according to the preceding claim, wherein the base portion has a substantially flat rectangular shape, wherein the intermediate portion has a substantially rectangular cross-sectional shape, and wherein the cross-sectional area of the intermediate portion is smaller than the area of the base portion.

3. The unit according to any of the preceding claims, wherein the base portion comprises a recess (313), the recess being formed in a lower surface of the base portion.

4. The unit according to any of the preceding claims, wherein the base portion comprises at least one protrusion (311), the at least one protrusion being formed on the lower surface of the base portion.

5. The unit according to claim 3 or claim 4, wherein
the recess (313) is adapted to engage with a fastening member (122, 322), and/or wherein the at least one protrusion (311) is adapted to engage with a corresponding recess (328) in a support structure (120, 320).

6. The unit according to any of the preceding claims, wherein the base portion comprises a side protrusion (119) and a side recess (118), the side protrusion and the side recess being formed in opposing side surfaces of the base portion.

7. The unit according to any of the preceding claims, wherein the coil comprises a flat electrically conductive wire material.

8. The unit according to any of the preceding claims, further comprising
a first wedge (124) adapted to fit snuggly on top of the coil and to keep the coil in place and/or
a second wedge (217) arranged at an outside end of the laminated body structure to protect the coil.

9. A stator assembly for a wind turbine generator, the stator assembly comprising
a stator support structure (120, 320), and
a plurality of pole units according to any of the preceding claims,
wherein the pole units are arranged along a circumference of the stator support structure.

10. A wind turbine generator comprising a stator assembly according to the preceding claim.

11. A wind turbine comprising a wind turbine generator according to the preceding claim.

12. A method of manufacturing a pole unit for a stator assembly of a wind turbine generator, the method comprising
stamping and gluing a plurality of layers of sheet metal, thereby forming a laminated body structure comprising a base portion, an intermediate portion, and a top portion, wherein the intermediate portion extends from at least a part of an upper surface of the base portion, wherein the top portion extends from the end of the intermediate portion that is opposite to the base portion and has an increasing cross-section in the direction away from the intermediate portion, and wherein an air duct is formed in the laminated body structure to allow a flow of cooling air, and
winding a coil around the intermediate portion.

13. The method according to the preceding claim, further comprising coating at least a part of the laminated body structure with an electrically insulating material prior to winding the coil around the intermediate portion.

14. The method according to claim 12 or 13, further comprising
mounting the laminated body structure in a winding machine prior to winding the coil around the intermediate portion, and
releasing the laminated body structure from the winding machine after winding the coil around the intermediate portion.

15. A method of assembling a stator assembly for a wind turbine generator, the method comprising
providing a stator support structure,
providing a plurality of pole units according to any of claims 1 to 8, and
arranging the pole units along a circumference of the stator support structure.

## Patentansprüche

1. Poleinheit für eine Statorbaugruppe (100, 200, 300) eines Generators einer Windenergieanlage, wobei die Poleinheit Folgendes umfasst:
eine mehrschichtige Körperkonstruktion mit einem Sockelabschnitt (110, 310), einem Zwischenabschnitt (112, 312) und einem oberen Abschnitt (114, 214, 314) und
eine Wicklung (116, 216), die um den Zwischenabschnitt gewickelt ist,
wobei sich der Zwischenabschnitt zumindest von einem Teil einer oberen Fläche des Sockelabschnitts aus erstreckt,
wobei sich der obere Abschnitt von dem Ende des Zwischenabschnitts aus erstreckt, das dem Sockelabschnitt gegenüberliegt, und in von dem Zwischenabschnitt aus verlaufender Richtung einen sich vergrößernden Querschnitt aufweist, und
wobei die mehrschichtige Körperkonstruktion einen Luftkanal (215) umfasst, der so ausgelegt ist, dass er ein Strömen von Kühlluft ermöglicht.

2. Einheit nach dem vorhergehenden Anspruch,
wobei der Sockelabschnitt eine im Wesentlichen flache, rechteckige Form aufweist, wobei der Zwischenabschnitt eine im Wesentlichen rechteckige Querschnittsform aufweist und wobei die Querschnittsfläche des Zwischenabschnitts kleiner ist als die Fläche des Sockelabschnitts.

3. Einheit nach einem der vorhergehenden Ansprüche,
wobei der Sockelabschnitt eine Vertiefung (313) umfasst, die in einer unteren Fläche des Sockelabschnitts ausgebildet ist.

4. Einheit nach einem der vorhergehenden Ansprüche, wobei der Sockelabschnitt mindestens einen Vorsprung (311) umfasst, der an der unteren Fläche des Sockelabschnitts ausgebildet ist.

5. Einheit nach Anspruch 3 oder 4,
wobei die Vertiefung (313) so ausgelegt ist, dass sie ein Befestigungselement (122, 322) in Eingriff nimmt, und/oder der mindestens eine Vorsprung (311) so ausgelegt ist, dass er eine entsprechende Vertiefung (328) in einer Trägerkonstruktion (120, 320) in Eingriff nimmt.

6. Einheit nach einem der vorhergehenden Ansprüche, wobei der Sockelabschnitt einen seitlichen Vorsprung (119) und eine seitliche Vertiefung (118) umfasst, die in gegenüberliegenden seitlichen Flächen des Sockelabschnitts ausgebildet sind.

7. Einheit nach einem der vorhergehenden Ansprüche, wobei die Wicklung ein flaches, elektrisch leitendes Drahtmaterial umfasst.

8. Einheit nach einem der vorhergehenden Ansprüche, die ferner Folgendes umfasst:
einen ersten Keil (124), der so ausgelegt ist, dass er gut auf die Wicklung passt und diese festhält, und/oder
einen zweiten Keil (217), der zum Schutz der Wicklung an einem äußeren Ende der mehrschichtigen Körperkonstruktion angeordnet ist.

9. Statorbaugruppe für einen Generator einer Windenergieanlage, wobei die Statorbaugruppe Folgendes umfasst:
eine Statorträgerkonstruktion (120, 320) und
mehrere Poleinheiten nach einem der vorhergehenden Ansprüche,
wobei die Poleinheiten an einem Umfang der Statorträgerkonstruktion entlang angeordnet sind.

10. Generator einer Windenergieanlage mit einer Statorbaugruppe nach dem vorhergehenden Anspruch.

11. Windenergieanlage mit einem Generator einer Windenergieanlage nach dem vorhergehenden Anspruch.

12. Verfahren zum Herstellen einer Poleinheit für eine Statorbaugruppe eines Generators einer Windenergieanlage, das Folgendes umfasst:
Stanzen und Kleben mehrerer Blechschichten, wodurch eine mehrschichtige Körperkonstruktion mit einem Sockelabschnitt, einem Zwischenabschnitt und einem oberen Abschnitt ausgebildet wird, wobei sich der Zwischenabschnitt zumindest von einem Teil einer oberen Fläche des Sockelabschnitts aus erstreckt, wobei sich der obere Abschnitt von dem Ende des Zwischenabschnitts aus erstreckt, das dem Sockelabschnitt gegenüberliegt, und in von dem Zwischenabschnitt aus verlaufender Richtung einen sich vergrößernden Querschnitt aufweist, und wobei ein Luftkanal in der mehrschichtigen Körperkonstruktion ausgebildet ist, der ein Strömen von Kühlluft ermöglicht, und
Wickeln einer Wicklung um den Zwischenabschnitt.

13. Verfahren nach dem vorhergehenden Anspruch, das ferner vor dem Wickeln der Wicklung um den Zwischenabschnitt das Beschichten zumindest eines Teils der mehrschichtigen Körperkonstruktion mit einem elektrisch isolierenden Material umfasst.

14. Verfahren nach Anspruch 12 oder 13, das ferner Folgendes umfasst:
vor dem Wickeln der Wicklung um den Zwischenabschnitt Einspannen der mehrschichtigen Körperkonstruktion in eine Wickelmaschine und
nach dem Wickeln der Wicklung um den Zwischenabschnitt Lösen der mehrschichtigen Körperkonstruktion aus der Wickelmaschine.

15. Verfahren zum Zusammenbauen einer Statorbaugruppe für einen Generator einer Windenergieanlage, das Folgendes umfasst:
Bereitstellen einer Statorträgerkonstruktion,
Bereitstellen mehrerer Poleinheiten nach einem der Ansprüche 1 bis 8 und
Anordnen der Poleinheiten an einem Umfang der Statorträgerkonstruktion entlang.

## Revendications

1. Unité polaire pour un ensemble stator (100, 200, 300) d'une génératrice d'éolienne, l'unité polaire comprenant
une structure corps stratifié comprenant une partie base (110, 310), une partie intermédiaire (112, 312), et une partie supérieure (114, 214, 314), et
une bobine (116, 216) enroulée autour de la partie intermédiaire,
dans laquelle la partie intermédiaire s'étend à partir d'au moins une partie d'une surface supérieure de la partie base,
dans laquelle la partie supérieure s'étend à partir de l'extrémité de la partie intermédiaire qui est opposée à la partie base et qui présente une section transversale en augmentation dans la direction qui s'éloigne de la partie intermédiaire, et
dans laquelle la structure corps stratifié comprend un conduit d'air (215) conçu pour permettre une circulation d'air de refroidissement.

2. Unité selon la revendication précédente, dans laquelle la partie base présente une forme rectangulaire essentiellement plate, dans laquelle la partie intermédiaire présente une forme en coupe transversale essentiellement rectangulaire, et dans laquelle la surface en coupe transversale de la partie intermédiaire est inférieure à la surface de la partie base.

3. Unité selon l'une quelconque des revendications précédentes, dans laquelle la partie base comprend un renfoncement (313), le renfoncement étant formé dans une surface inférieure de la partie base.

4. Unité selon l'une quelconque des revendications précédentes, dans laquelle la partie base comprend au moins une saillie (311), la au moins une saillie étant formée sur la surface intérieure de la partie base.

5. Unité selon la revendication 3 ou 4, dans laquelle le renfoncement (313) est conçu pour venir en prise avec un élément de fixation (122, 322), et/ou dans laquelle la au moins une saillie (311) est conçue pour venir en prise avec un renfoncement (328) correspondant dans une structure de support (120, 320).

6. Unité selon l'une quelconque des revendications précédentes, dans laquelle la partie base comprend une saillie latérale (119) et un renfoncement latéral (118), la saillie latérale et le renfoncement latéral étant formés dans des surfaces latérales se faisant face de la partie base.

7. Unité selon l'une quelconque des revendications précédentes, dans laquelle la bobine comprend un matériau plat formant fil électriquement conducteur.

8. Unité selon l'une quelconque des revendications précédentes, comprenant en outre
une première cale (124) conçue pour s'adapter aisément sur le dessus de la bobine et pour maintenir la bobine en place et/ou
une deuxième cale (217) agencée au niveau d'une extrémité extérieure de la structure corps stratifié afin de protéger la bobine.

9. Ensemble stator pour une génératrice d'éolienne, l'ensemble stator comprenant
une structure de support de stator (120, 320), et
une pluralité d'unités polaires selon l'une quelconque des revendications précédentes,
dans lequel les unités polaires sont agencées le long d'une circonférence de la structure de support de stator.

10. Génératrice d'éolienne comprenant un ensemble stator selon la revendication précédente.

11. Éolienne comprenant une génératrice d'éolienne selon la revendication précédente.

12. Procédé de fabrication d'une unité polaire destinée à un ensemble stator d'une génératrice d'éolienne, le procédé comprenant les étapes consistant à
estamper et coller une pluralité de couches de feuille métallique, ce qui forme une structure corps stratifié comprenant une partie base, une partie intermédiaire, et une partie supérieure, dans lequel la partie intermédiaire s'étend à partir d'au moins une partie d'une surface supérieure de la partie base, dans lequel la partie supérieure s'étend à partir de l'extrémité de la partie intermédiaire qui est opposée à la partie base et qui présente une section transversale en augmentation dans la direction qui s'éloigne de la partie intermédiaire, et dans lequel un conduit d'air est formé dans la structure corps stratifié pour permettre une circulation d'air de refroidissement, et
enrouler une bobine autour de la partie intermédiaire.

13. Procédé selon la revendication précédente, comprenant en outre une étape consistant à revêtir au moins une partie de la structure corps stratifié avec un matériau électriquement isolant préalablement à l'étape d'enroulement de la bobine autour de la partie intermédiaire.

14. Procédé selon la revendication 12 ou 13, comprenant en outre les étapes consistant à
monter la structure corps stratifié dans une machine de bobinage préalablement à l'étape d'enroulement de la bobine autour de la partie intermédiaire, et
libérer la structure corps stratifié à partir de la machine de bobinage après l'étape d'enroulement de la bobine autour de la partie intermédiaire.

15. Procédé d'assemblage d'un ensemble stator destiné à une génératrice d'éolienne, le procédé comprenant les étapes consistant à
fournir une structure de support de stator,
fournir une pluralité d'unités polaires selon l'une quelconque des revendications 1 à 8, et
agencer les unités polaires le long d'une circonférence de la structure de support de stator.
